(19) Europäisches Patentamt / European Patent Office / Office européen des brevets

(11) **EP 2 879 431 B1**

(12) **FASCICULE DE BREVET EUROPEEN**

(45) Date de publication et mention
de la délivrance du brevet:
**09.01.2019 Bulletin 2019/02**

(51) Int Cl.:
***H04W 28/18*** *(2009.01)*　　***H04W 88/16*** *(2009.01)*
***H04W 76/12*** *(2018.01)*　　***H04W 72/04*** *(2009.01)*

(21) Numéro de dépôt: **14193815.9**

(22) Date de dépôt: **19.11.2014**

(54) **Equipement de passerelle d'accès de mobiles à internet**

Gatewayvorrichtung zum mobilen Zugang im Internet

Gateway device for mobile access to the internet

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.11.2013 FR 1361880**

(43) Date de publication de la demande:
**03.06.2015 Bulletin 2015/23**

(73) Titulaire: **Halys
92130 Issy les Moulineaux (FR)**

(72) Inventeurs:
• **Cruaux, Sébastien
94320 Thiais (FR)**
• **Henry-Labordere Arnaud
75007 Paris (FR)**

(74) Mandataire: **Cabinet HERRBURGER
115, Boulevard Haussmann
75008 Paris (FR)**

(56) Documents cités:
**WO-A1-2011/160660**

• "3rd Generation Partnership Project; Technical Specification Group Services and System Aspects; Policy and charging control architecture (Release 12)", 3GPP STANDARD; 3GPP TS 23.203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.2.0, 11 septembre 2013 (2013-09-11), pages 1-204, XP050712235,
• "3rd Generation Partnership Project; Technical Specification Group Core Network and Terminals; Policy and Charging Control signalling flows and Quality of Service (QoS) parameter mapping (Release 12)", 3GPP STANDARD; 3GPP TS 29.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V12.1.0, 19 septembre 2013 (2013-09-19), pages 1-200, XP050712613,
• "3rd Generation Partnership Project; Technical Specification Group Services and System Aspects; System Enhancements for User Plane Congestion Management (Release 12)", 3GPP STANDARD; 3GPP TR 23.705, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.8.0, 18 octobre 2013 (2013-10-18), pages 1-51, XP050728620,

**Description**

**Domaine de l'invention**

La présente invention a pour objet une passerelle d'accès de mobiles à Internet comprenant une passerelle d'accès à Internet PGW/GGSN dans un réseau en mode 4G ou 3G et un routeur PCEF gérant la sortie vers un point d'accès APN au réseau Internet.

**Etat de la technique**

Bien que pour la description du fonctionnement d'un réseau de téléphonie mobile GPRS et de sa liaison à des réseaux externes, la pratique utilise une terminologie anglo-saxonne consacrée et définitivement établie, dans le cas présent, pour simplifier la description générale de l'invention, cette terminologie ne sera pas utilisée dans un premier temps mais seulement pour la description très détaillée qui sera faite ensuite.

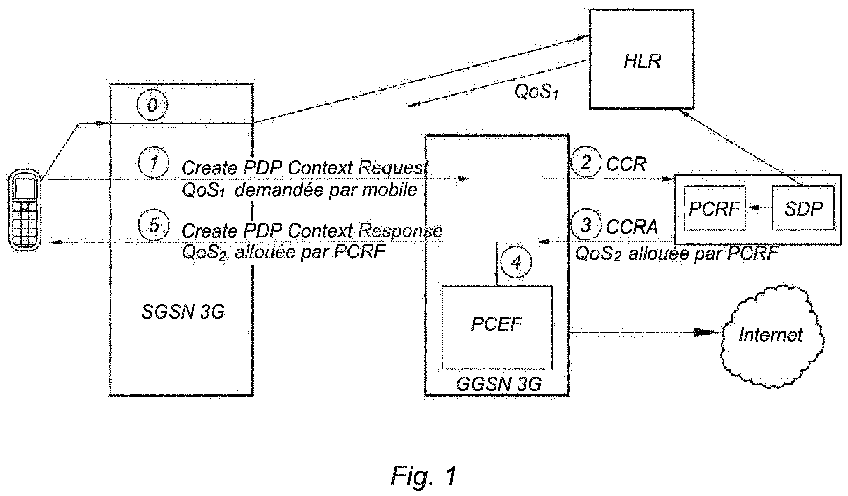

La figure 1 montre la situation actuelle d'un mobile abonné d'un réseau fonctionnant selon la norme 3G et qui demande une session Internet.

La figure 1 se limite aux seuls éléments du réseau de l'abonné du mobile MS, utiles pour la compréhension de l'établissement de cette session.

Ainsi, le réseau GPRS fonctionnant en mode 3G se compose de stations de base associées aux cellules du réseau. Ces stations de base auxquelles s'adresse le mobile MS, communiquent par liaison radio avec le coeur du réseau constitué par une passerelle d'entrée SGSN en liaison avec une passerelle d'accès Internet GGSN. Les informations relatives au mobile MS sont enregistrées dans le registre HLR recevant lui-même les informations relatives au mobile MS telles que les différentes modalités de fonctionnement du mobile, les services autorisés et les modes de facturation.

La passerelle d'accès GGSN a une fonction PCEF jouant le rôle de routeur vers Internet. La passerelle d'accès est également en communication avec la fonction PCRF qui gère les stratégies et les modalités de facturation des services. Cette fonction PCRF est alimentée par une base de données SDP contenant des informations plus précises que le registre HLR quant aux différents services, notamment les services par Internet auxquels a souscrit le mobile MS. Ces services Internet sont affectés d'un coefficient de qualité QoS qui définit notamment le débit de transfert de données (encore appelé « bande passante ») dont peut bénéficier le mobile MS pour ses différents services par Internet. Les coefficients pour ces services par Internet peuvent être variables selon les points d'accès APN au réseau Internet.

Schématiquement, à chaque point d'accès APN qui représente un service par Internet, est associé un coefficient de qualité de service QoS définissant le débit de données pour le service concerné.

La procédure de demande de service par le mobile MS se compose d'une phase d'attachement au réseau GPRS au cours de laquelle le mobile MS accède à son réseau GPRS suivie d'une phase d'établissement d'une session que demande le mobile MS à son réseau GPRS et qui est accordée et établie selon ce à quoi le mobile MS a droit suivant les modalités de son abonnement au réseau GPRS. Ces phases sont résumées ci-après.

Tout d'abord, le mobile MS demande l'attachement au réseau par une requête (0) qui est transmise à la passerelle d'entrée SGSN par l'intermédiaire de la station de base non représentée. La passerelle d'entrée SGSN demande les informations relatives à l'abonné MS au registre HLR et reçoit en retour les informations mises à jour avec notamment le coefficient de qualité de service $QoS_1$. Il s'agit du coefficient de base.

Après cette phase d'attachement au réseau GPRS, le mobile MS demande une session par Internet. Pour cela, il envoie une requête (1) à la passerelle d'entrée SGSN qui transmet cette requête à la passerelle d'accès Internet GGSN. Celle-ci demande une mise à jour des informations à la fonction PCRF par une requête (2) CCR. La fonction PCRF demande des informations plus précises quant au mobile MS et aux différents paramètres et notamment le coefficient QoS. La base SDP transmet les informations approfondies à la fonction PCRF qui, en réponse à la requête (2), fait une réponse (3) CCRA qui indique le coefficient QoS (2) pour le flux avec Internet. La session se déroule ensuite dans les conditions ainsi définies sans tenir compte des autres mobiles de la cellule qui sont déjà en trafic dans des sessions en cours. Il en résulte un fonctionnement aléatoire du flux de données échangées par les différents mobiles MS de la session avec Internet.

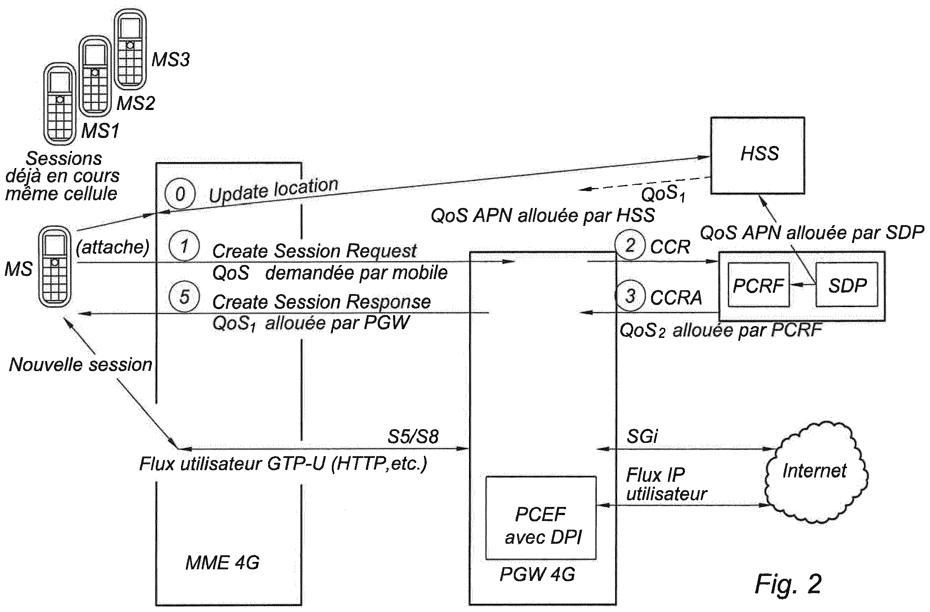

La figure 2 montre la situation actuelle dans le cas d'un réseau GPRS fonctionnant selon la norme 4G. Certains des éléments du réseau et des fonctions portent des noms différents de ceux du réseau en norme 3G mais pour les besoins de la présente description, ces fonctions sont considérées comme étant globalement les mêmes.

Les différences de terminologie sont les suivantes : la passerelle d'entrée SGSN est appelée passerelle d'entrée MME et la passerelle d'accès à Internet, GGSN, devient la passerelle d'accès PGW.

Dans la norme 4G, le registre de localisation HLR devient le registre HSS. Celui-ci a une fonction supplémentaire de la fonction du registre HLR en ce qu'il a également la fonction d'authentification.

Le nom des messages échangés est également modifié, ainsi la requête pour demander l'ouverture d'une session, à partir du mobile MS, devient la requête CRSR.

Le fonctionnement de base est le même. Le mobile MS demande d'abord son attachement au réseau GPRS par une requête (0) qui est transmise à la passerelle d'entrée MME par la station de base eBN de la cellule dans laquelle se trouve le mobile MS. La passerelle MME s'adresse au registre HSS pour obtenir des informations à jour du mobile MS. En retour, la passerelle MME reçoit le coefficient de service $QoS_1$ aux points d'accès APN auxquels a droit le mobile MS qui, d'entrée, qui demande ensuite l'ouverture d'une session. Il adresse la requête (1) à la passerelle MME qui la transmet à la passerelle d'accès PGW. Celle-ci se renseigne auprès de la fonction PCRF qui, elle-même, tenant compte des informations approfondies de la base SDP, définit un coefficient de qualité de service $QoS_2$ qu'il faut appliquer. Ce coefficient $QoS_2$ est transmis à la fonction PCEF de la passerelle d'accès PGW et aussi à la passerelle d'entrée MME qui l'envoie au mobile MS. Le mobile MS échangera alors le flux utilisateur IP avec Internet en application de ce coefficient $QoS_2$ avec les aléas liés à l'encombrement de la cellule du fait des autres sessions déjà en cours avec les mobiles MS1, MS2, MS3.

De façon plus détaillée :

Les passerelles d'accès GGSN et PGW mettent en oeuvre la fonction PCC de contrôle de stratégie et de paiement (Policy and Charging Control) qui permet de définir des coefficients QoS (Qualité de Service) individuels pour les abonnés. Ils s'articulent autour de trois sous-ensembles principaux :

- passerelles de sortie GGSN ou PGW,
- routeur PCEF (avec DPI (Deep Packet Inspection), et
- fonction PCRF (Policy and Charging Regulation Function). La fonction PCRF comprend une base de données SDP (Service Data Point) qui est une base de données définissant les coefficients QoS des abonnés y compris ceux des abonnés qui sont prioritaires avec leur degré de priorité.

Suivant les réalisations actuelles et les standards, le routeur PCEF communique avec la fonction PCRF par le protocole Gx basé sur DIAMETER et avec Internet par l'interface Gi ou SGi. La passerelle GGSN ou PGW et le routeur PCEF peuvent être dans la même machine ou séparés.

Les fonctions PCC actuelles (ensemble MME + PGW - PCEF + PCRF) attribuent le débit à une nouvelle demande dans une cellule :

1. sans tenir compte (dans la plupart des cas) de l'occupation radio de la cellule,
2. et surtout: sans possibilité de "faire de la place" en baissant autoritairement le débit d'un ou plusieurs utilisateurs ou même en coupant les autres utilisateurs non prioritaires de la cellule du nouvel entrant prioritaire, sans possibilité de forcer les utilisateurs les moins prioritaires à un transfert sur une cellule voisine.

Les opérateurs actuels ont besoin d'une fonction PCEF effectuant l'analyse détaillée des flux Ip venant des utilisateurs de sorte que le routeur PCEF doit avoir une fonction DPI (Deep Packet Inspection) capable de reconnaître la nature des flux VoIP (priorité), téléchargement (peu prioritaire) ou carrément bloqué (cas du service Skype chez certains opérateurs). Cette fonction DPI est gourmande en traitement alors que le flux total IP de certains opérateurs même moyens (6 millions d'abonnés) nécessite 90 Gbps dans certains pays.

Le concept de réseau (radio), auto-organisé (SON ou Self Organizing Networks) est prévu dans les réseaux 4G au niveau des stations de base eNB avec aussi possibilité dans les réseaux 3G récents. Cette organisation permet aux stations de base eNB voisines de s'échanger des données d'encombrement, de nombre d'utilisateurs, etc... pour pouvoir transférer les utilisateurs d'une cellule à une autre voisine avec éventuellement modification de leurs priorités. Une forme conceptuelle de réalisation est le réseau C-SON (Centralised SON) où les décisions sont prises d'une façon centralisée sans prendre en compte les priorités.

Dans un réseau 4G, la régulation du trafic est faite par les stations de base eNB qui, en fonction du coefficient QoS (Qualité de Service) attribuent aux différents utilisateurs des tranches de temps de transmission plus ou moins nombreuses, dans le sens descendant (DL, sens services Internet -> mobile) et dans le sens montant (UL, sens mobile -> services internet). Les mobiles ont simplement une capacité de file d'attente dans le sens UL en utilisant les tranches de temps attribuées par les stations de base eNB et conformes à leur coefficient QoS.

Schématiquement, la figure 1 ne montre pas d'autres abonnés que le seul abonné MS puisque ces autres abonnés sont déjà en trafic et que leur mode de fonctionnement ne peut plus être modifié.

Dans le cas d'un réseau GPRS appliquant la norme 4G LTE selon la figure 2, les différences essentielles sont les suivantes :

- la passerelle d'entrée MME remplace la passerelle d'entrée SGSN,
- la passerelle d'accès PGW remplace la passerelle d'accès GGSN,
- la requête « Create Session Request » (GTPV2) remplace la requête « Create PDP Context » (GTPV1).

Pour simplifier, la station de base ENODEB (eNB) servant le mobile MS n'est pas représentée mais seulement les liaisons logiques entre le mobile MS et la passerelle d'entrée MME (encore appelée unité MME).

Selon la figure 2, initialement, les profils d'abonnés et leurs coefficients de qualité de services sont créés avec la base SDP qui recopie les coefficients de qualité de service définis individuellement pour chaque abonné vers la fonction PCRF. La base SDP définit aussi et recopie la classe générale des coefficients de qualité de service, celle commune à tous les abonnés utilisant un service donné par un point d'accès au réseau APN vers le registre HSS. Il y a ainsi des points d'accès APN pour l'accès à Internet, pour le service MMS (multimédia messaging Service, etc...).

La phase d'attachement (0) du mobile MS au réseau GPRS consiste à l'envoi par le mobile MS d'une demande « attache » à la passerelle d'entrée MME. La passerelle MME envoie un message « « Update location GPRS ») au registre HSS (cet équipement contient les profils des abonnés et joue le même rôle que le registre HLR en norme 3G) avec le numéro IMSI identifiant l'abonné et le service de point d'accès APN demandé par l'abonné. En retour, le registre HSS renvoie le coefficient « QoS APN » alloué par le registre HSS qui est le coefficient QoS APN alloué par la base SDP. Ce coefficient n'est pas individualisé ; il est identique pour tous les abonnés qui utilisent ce service de point d'accès APN. De façon plus détaillée, le coefficient « QoS APN » alloué par le registre HSS est renvoyé ; dans la norme 3G, il est renvoyé dans le message « INSERT_SUBSCRIBER_DATA » émis par le registre HLR, le coefficient s'appelle QoS-subscribed dans la norme 3GPP TS 29.272 (protocole S6a/DIAMETER) de la 4G et 3GPP TS 29.002 (protocole MAP) pour ce cas de la 3G. Le codage détaillé de ce coefficient QoS, dans la norme 3GPP TS 29.008, est identique pour 4G et 3G. On a donc le coefficient QoS APN allouée par le HSS = QoS-subscribed.

Après cette phase d'attachement au réseau GPRS, le mobile MS veut accéder aux services Internet et envoie à la passerelle MME une requête « Create Session Request » (1) que la passerelle MME envoie à la passerelle PGW. Cette requête contient le coefficient QoS demandé par le mobile, intégré dans la requête qui est le coefficient QoS APN alloué par le registre HSS et qui provient de son profil d'abonnement dans le registre HLR connu de la passerelle d'entrée SGSN. En effet et comme indiqué ci-dessus, dans le cas de la norme 4G, le registre HSS a transmis à la passerelle d'entrée le coefficient QoS au moment de l'attachement.

La passerelle d'accès PGW doit alors demander à la fonction PCRF, le coefficient QoS à attribuer au mobile MS compte tenu de son profil plus détaillé que celui contenu dans le registre HSS. La passerelle PGW fait la requête (2) selon la figure 1 (« Crédit Control Request ») du protocole DIAMETER.

La fonction PCRF retourne le coefficient QoS attribué dans sa réponse (3) « Crédit control Ack ». Ce coefficient QoS attribué par la fonction PCRF est celui retourné tel quel (réponse 5) au mobile MS. Il ne dépend que de l'abonné et pas des autres abonnés qui sont sur la même cellule. Les deux coefficients QoS, à savoir le coefficient QoS demandé et le coefficient QoS attribué sont transmis par la passerelle PGW à la fonction PCEF qui est un routeur IP intelligent conçu pour suivre les consignes de coefficients QoS qui lui sont adressées par la fonction PGW (message 4).

Le document 3GPP TS 23.203 v12.2.0 divulgue l'architecture "Policy and Charging Control, PCC" implementé par la fonction "Policy Control and Charging Rules Function, PCRF" et la fonction "Policy and Charging Enforcement Function, PCEF" comme indiqué dans la Figure 5.1-1. En particulier, le PCEF impose la qualité de service, QoS, autorisée d'un "service data flow, SDF", indiqué par le PCRF, conformément à la règle PCC active. Le PCEF contrôle la qualité de service, QoS, fournie à un ensemble combiné de "service data flow, SDF".

Le document WO 2011/160660 décrit que le "Policy Control and Charging Rules Function, PCRF" génère un profil de qualité de service, QoS, pour un certain "service data flow, SDF" sur la base de la congestion de la cellule ou la demande pour le contexte PDP à été émise. Par la suite, le PCRF transmet le profil de qualité de service, QoS, au "Policy and Charging Enforcement Function, PCEF" qui applique le profil de qualité de service, QoS, mis à jour. Une table d'état de congestion contenant l'identifiant de cellule pour les cellules congestionnées et l'IMSI du terminal mobile connecté à chaque cellule congestionnée est utilisée.

## But de l'invention

La présente invention a pour but de développer un équipement de passerelle d'accès des mobiles aux services Internet en 3G ou 4G permettant d'optimiser le fonctionnement du réseau en faisant place aux abonnés prioritaires en cas de saturation de la cellule visitée ou du canal de connexion avec le réseau Internet, notamment pour des abonnés très prioritaires nécessitant une libération instantanée de la capacité, notamment pour des appels de groupe, en assurant le débit garanti par l'opérateur, pour optimiser le fonctionnement du réseau en s'appuyant sur les standards officiels des protocoles 3G et 4G pour interopérer avec d'autres équipements conformes aux standards.

## Exposé et avantages de l'invention

La présente invention a pour objet un équipement de passerelle d'accès de mobiles à Internet comprenant une ou plusieurs passerelles d'accès à Internet (PGW/GGSN) et un routeur (PCEF), équipement caractérisé en ce qu'il comprend un module dynamique d'allocation (MADF), et une base de données (BD-URR) contenant l'occupation en débit des cellules et des routeurs, le module dynamique (MADF) étant adapté pour traiter la requête de session d'un mobile entrant (MS) et pour calculer le coefficient de qualité de service, QoS, indiquant la priorité qui sera attribué au mobile entrant (MS) en tenant compte de l'occupation en débit de la cellule de ce mobile entrant (MS) par les autres mobile utilisateurs (MS1, MS2, MS3) déjà engagés dans des sessions dans la même cellule et de leurs coefficients de qualité de service, QoS, indiquant les priorités de ces autres mobiles utilisateurs pour optimiser le flux total (somme des débits alloués aux mobiles utilisateurs MS1, MS2, MS3) possible en fonction des débits alloués et réorganiser la répartition des débits alloués en fonction des coefficients de qualité de service, QoS, des différents mobiles utilisateurs (MS1, MS2, MS3), en tenant également compte du débit maximum disponible sur l'interface du routeur (PCEF) avec Internet, le module dynamique (MADF) étant aussi adapté pour recalculer les coefficients de qualité de service, QoS, des différents mobiles utilisateurs (MS1, MS2, MS3) déjà engagés dans des sessions dans la même cellule.

Suivant une autre caractéristique de l'invention, le module dynamique d'allocation tient compte des priorités à l'arrivée d'un mobile entrant et génère des requêtes à destination des mobiles de la cellule du mobile entrant :

- une requête de modification de coefficient,
- une demande de suppression de session,
- une demande de transfert d'un mobile vers une autre cellule,
- une demande de dégradation du coefficient QoS d'un mobile non prioritaire en activant un « Contexte PDP secondaire »,
- en fonction de l'optimisation de l'utilisation des ressources de communication du réseau et des priorités des différents abonnés déjà en session.

Suivant une autre caractéristique, plusieurs routeurs gérés par le module dynamique et la fonction pour adapter le flux utilisateur aux besoins d'une cellule.

En d'autres termes, l'invention a pour objet un équipement de passerelle d'accès des mobiles à internet avec gestion préemptive des priorités, constituée d'un PGW et de un ou plusieurs PCEF pour assurer un débit important, PGW comportant un MADP Module Dynamique d'Allocation des priorités et une base de donnés BD URR contenant l'occupation en débit des différentes cellules et des différents PCEF. Passerelle d'accès permettant de réallouer les Qualités de Service QoS pour donner une priorité à certaines catégories d'utilisateurs en changeant la QoS des autres déjà actifs sur la cellule concernée.

Dans le cadre de l'invention, le module MADP peut changer les priorités des utilisateurs moins prioritaires en émettant des Modify Bearer Request en 4G ou des Update PDP Context en 3G, et peut aussi couper leur service en émettant des Delete Session Request en 4G ou des Delete PDP Context en 3G, après avoir recalculé l'ensemble des QoS de la cellule par une optimisation d'un problème ainsi de type « sac à dos »

Selon l'invention, la fonction PGW peut ainsi demander à la passerelle d'entrée ou unité MME (ou SGSN en mode 3G) de forcer le passage d'un abonné non prioritaire sur une autre cellule voisine, la position géographique du centre des cellules étant fournie par la base de données BD-URR.

La présente invention concerne un équipement de passerelle d'accès des mobiles aux services internet appelée GGSN en 3G et PGW en 4G. Elle permet, à la différence des systèmes connus de faire de la place pour les abonnés prioritaires en cas de saturation de la cellule radio visitée par ceux-ci, ce qui est le cas le plus fréquent ou du canal de connexion avec le réseau internet. Ceci est particulièrement nécessaire quand les infrastructures de réseaux de données mobiles sont partagées entre des abonnés ordinaires et des services officiels de sécurité. En cas de besoin, il faut libérer instantanément de la capacité notamment pour les « appels de groupe » (pompiers, policiers, etc.) qui doivent communiquer entre eux pour s'échanger des données ou pour des communications vocales par VoIP avec la qualité et la vitesse requise. L'invention assure le respect strict du « débit garanti » par l'opérateur quand le service est autorisé, c'est-à-dire qu'il n'est pas une fraction de celui-ci, ce qui implique l'utilisation de variables entières dans l'optimisation et nécessitant le cas échéant, le délestage des abonnés à faible priorité.

Dans le cadre de l'invention, les coefficients QoS sont calculés de façon centralisée en fonction de l'occupation de la cellule de l'ensemble du réseau radio ainsi que du niveau du trafic des différents utilisateurs.

L'invention prend effet au moment de la décision initiale d'attribution du service au nouvel entrant et non pas dynamiquement en fonction d'un trafic anonyme comme le fait un réseau SON.

### Dessins

La présente invention sera décrite ci-après de manière plus détaillée à l'aide des dessins annexés montrant d'une part un équipement connu et d'autre un équipement selon l'invention avec chaque fois des passerelles d'accès des mobiles aux services Internet représentés dans les dessins annexés dans lesquels :

- la figure 1 est un schéma simplifié de la passerelle d'accès connue dans un réseau 3G,

- la figure 2 est un schéma de la passerelle d'accès connue dans un réseau 4G,
- la figure 3 est le schéma de l'équipement de passerelle d'accès selon l'invention dans un réseau 4G,

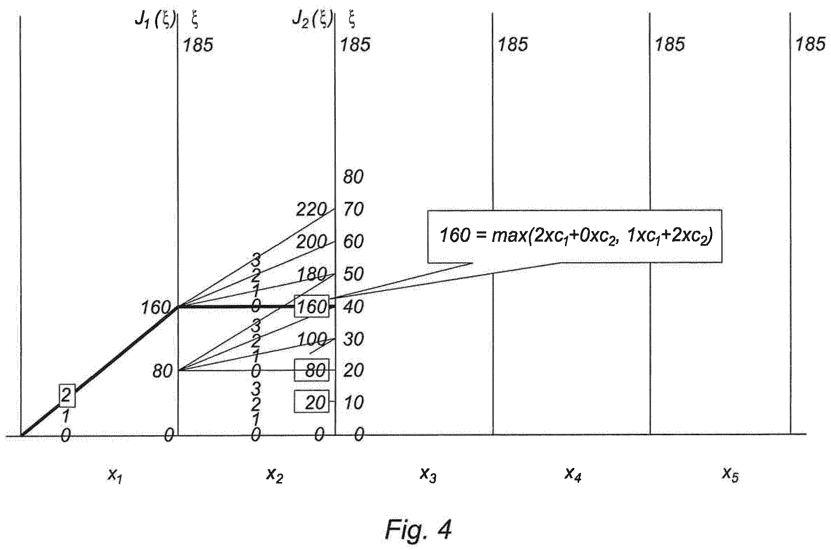

- la figure 4 montre un graphique d'optimisation du fonctionnement d'une cellule par la passerelle d'accès selon l'invention.

**Description de modes de réalisation**

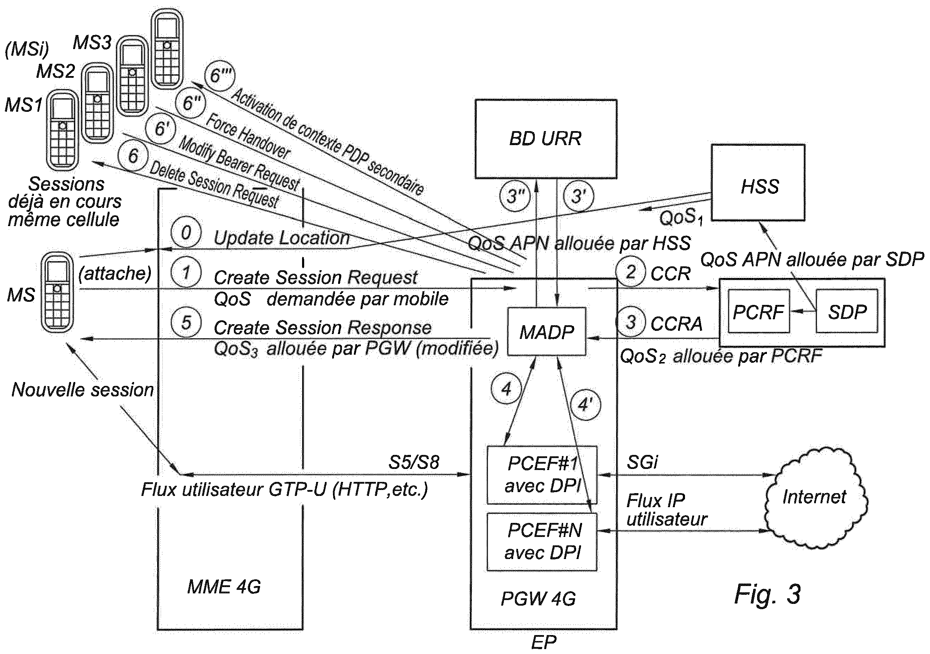

La figure 3 est un schéma d'un réseau GPRS en mode 4G avec un équipement d'accès à Internet EP selon l'invention.

Cet équipement d'accès à Internet EP est en relation avec la passerelle d'entrée MME et le registre HSS ainsi qu'avec la fonction de contrôle de stratégie et de facturation PCRF et la base de données de clients SDP. L'équipement EP selon l'invention se compose d'une passerelle d'accès PGW avec un ou plusieurs routeurs PCEF selon les flux de données à traiter appliquant la fonction PCEF pour la transmission du flux utilisateur IP avec Internet et avec le ou les mobiles MS, MS1, MS2, MS3 de la cellule, ainsi qu'un module dynamique d'allocation MADF dont la fonction est de définir le coefficient QoS que doit appliquer le routeur PCEF aux flux IP des mobiles en session.

L'équipement EP est complété par une base de données BD-URR qui contient les informations relatives aux cellules et aux routeurs et en particulier le degré d'occupation à tout instant.

L'équipement de passerelle d'accès EP permet de gérer le flux utilisateur IP des différents mobiles MS, MS1, MS2, MS3 dont les sessions sont déjà en cours dans la cellule dans laquelle le mobile MS, nouvel entrant, demande à son tour une session, en fonction des priorités des abonnés déjà en session (ces abonnés sont alors appelés « utilisateurs ») et de la priorité du mobile MS entrant. La priorité dont bénéficie un abonné est donnée par le coefficient de qualité de services QoS (appelé en abrégé coefficient QoS).

Lors de l'attachement du mobile MS au réseau GPRS, par un échange de messages, le mobile MS a reçu le coefficient $QoS_1$ enregistré dans le registre HSS consulté et qui n'est pas le coefficient QoS qui sera finalement attribué au mobile MS pour la session qu'il va demander. Il s'agit dans cette phase initiale de la transmission automatique de différents paramètres associés au mobile MS dont ce coefficient « initial » $QoS_1$.

Le mobile MS ainsi attaché à son réseau GPRS peut demander la création d'une session par un message CSR (1) envoyé à la passerelle d'entrée MME qui s'adresse à l'équipement d'accès aux services Internet EP. La fonction PGW de l'équipement EP s'adresse à la fonction PCRF pour lui demander le coefficient QoS qui est alloué par la fonction PCRF au mobile MS. La réponse est un coefficient $QoS_2$ défini par la fonction PCRF et qui peut être différent du coefficient $QoS_1$ transmis par le registre HSS au moment de l'attachement du mobile MS.

Ce coefficient $QoS_2$ est traité par le module MADP en fonction des informations d'occupation de la cellule, demandées par le module MADP à la base de données BD-URR. Le module MADP calcule ainsi le coefficient $QoS_3$ qui sera attribué. Ce coefficient $QoS_3$ peut être différent du coefficient $QoS_2$ qui lui a été envoyé par la fonction PCRF car le module MADP tient compte du degré d'occupation de la cellule à l'instant donné ainsi que des priorités des différents mobiles MS1, MS2, MS3 déjà engagés dans une session (utilisateurs MS1...MS3).

Selon l'échelle des priorités et le débit total disponible, le module MADP fait une optimisation pour définir non seulement le coefficient $QoS_3$ destiné au mobile MS mais également recalculer éventuellement les coefficients $QoS_{4i}$ des autres mobiles MS1, MS2, MS3 déjà en cours de session dans la même cellule.

L'optimisation faite par le module MADP peut consister à arrêter la session d'un mobile MSi, non prioritaire si le débit total disponible n'est pas suffisant pour toutes les sessions des mobiles MS, MS1...MS3.

Le module MADP peut également transférer un mobile MSi sur une autre cellule moins chargée et poursuivre automatiquement la session par cette autre cellule.

Le module MADP peut aussi modifier le débit alloué à tel ou tel utilisateur ou groupe d'utilisateurs MSi.

Le module MADP adresse aux utilisateurs MS1...MS3 un message (appelé réponse) et qui contient les nouvelles modalités de fonctionnement des sessions des utilisateurs MS1...MS3 intégrant la session demandée par le mobile entrant MS.

En fait, la réponse adressée par le module MADP à l'un ou l'autre des mobiles déjà en cours de session dans cette même cellule est une demande de suppression de session (6) pour interrompre la session du mobile ou une demande de modification (6') par un nouveau coefficient QoS adressée au mobile MS2 ou encore une demande de transfert de cellule (6") adressée au mobile MS3 de façon que ce mobile change de cellule et libère ainsi du débit. Les mobiles MS, MS1, MS2, MS3 de la cellule verront donc à ce moment leurs conditions de flux IP modifiées, voire supprimées ou transférées à une autre cellule pour respecter le degré des différentes priorités attachées aux mobiles MS, MS1, MS2, MS3 de la cellule. Dans la figure 3 en 6'", on pourrait aussi utiliser une activation de « PDP Context secondaire » à l'initiative du réseau, avec une QoS inférieure pour les abonnés dont on veut réduire le service sans changement de cellule ni interruption.

De façon plus détaillée :
L'invention réalise un réseau auto-organisé prenant en compte la valeur des différentes catégories d'abonnés et s'appuyant sur les standards officiels des protocoles 3G et 4G, c'est à dire que l'équipement de l'invention peut interopérer avec d'autres équipements conformes aux standards connus.

Les contextes dans l'équipement EP contiennent pour chaque utilisateur actif le numéro de cellule et le débit qui lui a été affecté par la fonction PGW.

La figure 3 explique la centralisation nécessaire de la connaissance de l'utilisation des débits des différentes cellules radio et d'une grande puissance de traitement de la fonction PCEF appliquée éventuellement plusieurs unités PCEF 1,2,...,N mais controlées par une fonction PGW unique, qui gère le flux de contrôle GTP-C servant à la gestion des connexions, création, modification, suppression. Cette centralisation est indispensable pour donner à l'équipement PGN la puissance nécessaire pour gérer le flux IP important selon la norme 4G. Elle se caractérise par la possibilité de gérer un ou plusieurs routeurs PCEF1...n. Pour l'exemple d'un flux total de 90 Gbps, il peut être nécessaire d'avoir une dizaine de routeurs PCEF avec une unique fonction PGW traitant 2000 sessions / sec pour le flux de contrôle GTP-C. Cela ne pose pas de difficulté de réalisations avec les systèmes actuels. Pour de petites configurations, la réalisation de l'invention peut par exemple, intégrer l'équipement EP et le routeur PCEF dans le même serveur.

La figure 3 montre le cas d'une demande de nouvelle session alors qu'il y a des sessions déjà en cours dans la cellule (SAI).

A chaque nouvel entrant MS, la fonction PCC de l'invention optimise globalement une fonctionnelle linéaire faisant intervenir les demandes et priorités des utilisateurs connectés et du nouveau requérant. Une inégalité linéaire modélise l'utilisation maximale des ressources de la cellule du requérant. Une autre inégalité linéaire (rarement saturée) est la bande passante maximale disponible sur l'interface Gi ou SGi. Les variables à optimiser *sont donc entières.*

L'algorithme de résolution à chaque requête « Create PDP Context » (3G) ou « Create Session Request » (4G) extrêmement rapide par programmation dynamique (Hamilton-Bellman-Jacobi) est intégré à l'équipement GGSN-PGW. Plusieurs milliers de résolutions par secondes sont possibles, ce n'est pas un frein à la vitesse du système

La fonction PGW consulte la fonction PCRF avec le code IMSI du requérant. La fonction PCRF fournit en retour à la fonction PGW le coefficient QoS attribué à ce nouveau requérant dont le profil, contenant notamment le niveau de priorité, est hébergé dans la base de données DB du module SDP.

Compte-tenu des abonnés actifs présents sur la cellule concernée, l'équipement EP recalcule les coefficients QoS de chaque utilisateur dans la cellule sans se limiter au seul nouveau requérant. L'équipement EP fait des modifications nécessaires de tous les coefficients QoS concernés en envoyant des requêtes de modification "Modify Bearer Request" vers les mobiles par la passerelle MME de la cellule concernée.

L'équipement EP a une base de données des cellules avec l'estimation du débit disponible en fonction de la technologie et du nombre de TRX installés.

La fonction PCRF et son interface Gx restent standards car l'équipement EP fait un retraitement mathématique et télécommande les modifications des coefficients QoS vers les utilisateurs MS.

Dans la suite, les « cellules », sont appelées, selon le terme précis, des cellules SAI (Service Area Identifier, Cell ID, etc.).

Selon la figure 3, par la requête (1) le mobile MS s'est attaché à l'unité MME. L'unité MME crée une session avec la passerelle PGW en envoyant un message CSR (Create Session Request) (protocole GTP v2) à l'équipement EP. S'il s'agissait de la norme 3G pour laquelle l'invention s'applique, ce serait la passerelle d'entrée SGSN qui envoie une requête « Create PDP Context » (protocole GTP v1) à l'équipement EP avec une passerelle GGSN. Il transmet dans le paramètre « Bearer Context » sa demande de coefficient QoS. Le message est reçu par l'équipement EP qui demande à la fonction PCRF (2) le coefficient QoS attribué au requérant MS en lui passant un identifiant (IMSI) ; la requête CCR (Credit Control Request) du protocole Gx est utilisée.

La fonction PCRF a une base SDP de données et de règles qui lui permet de retourner le coefficient QoS sans tenir compte de l'occupation de la cellule visitée par le nouvel entrant. Ce coefficient QoS sert pour le flux UL (Uplink) de l'utilisateur et pour le flux DL (Downlink) ; le message CCA (Credit Control Ack) est retourné (3) selon le fonctionnement connu.

Mais en utilisant le Module MADP Dynamique d'Allocation des Priorités de l'invention, l'équipement EP interroge sa base de données BD-URR des cellules pour connaître l'occupation de celle du nouvel entrant. L'équipement résout un « problème de sac à dos » de façon à déterminer si le coefficient QoS alloué par la fonction PCRF peut être satisfait ou nécessite un changement de coefficient QoS des autres utilisateurs ou même un délestage.

Dans l'équipement EP, la fonction PGW connaît le nombre de sessions et les débits traités par les différents routeurs PCEF#1,2, ..N qu'elle contrôle. Elle en choisit un, par exemple le # 1 de la figure 2. Il lui envoie (4) un message « Create Session PCEF Request » qui comporte essentiellement :

- le coefficient QoS alloué par l'équipement PGW (ce paramètre peut être différent de celui alloué par la fonction PCRF),
- les identifiants du tunnel GTP-U qui permettent au routeur PCEF choisi de router le trafic utilisateur descendant DL vers la station eNB qui couvre l'utilisateur, ou vers la passerelle SGSN dans la norme 3G.

Le routeur PCEF choisi, retourne une requête « Create Session PCEF Response » (4) qui comporte l'identifiant du tunnel GTP-U pour le mobile qui envoie son trafic montant UL vers le routeur PCEF.

Suivant l'invention, une fois que le routeur PCEF choisi a répondu par la réponse « Create Session Response », celle-ci est renvoyée (5) à l'unité MME. Ce qui fait que le flux utilisateur du nouvel entrant *ne démarre qu'une fois que le routeur PCEF choisi a* été *rendu prêt* par le message (4).

Aussitôt après avoir envoyé la réponse (5), l'équipement EP peut, à partir du résultat du problème de sac à dos, envoyer des commandes (6) (Delete Session Request) pour couper un utilisateurl#1 moins prioritaire de la cellule, ou changer le coefficient QoS (6') de l'utilisateur # 2 par une requête « Modify Bearer Request ». En 3G, ce serait respectivement les commandes « Delete PDP Context » et « Update PDP Context » ; ces commandes sont prévues pour être émises par la passerelle de sortie GGSN.

La figure 3 montre aussi (6") le transfert forcé de l'utilisateur # 3 déjà connecté pour passer sur une cellule voisine. Le Module MADP peut trouver une cellule dans la base de données BD-URR qui contient, selon l'invention, la position géographique (latitude-longitude) du centre approximatif des cellules.

Exemple pratique de l'allocation par « problème du sac à dos » (figure 3)

| | |
|---|---|
| - Six stratégies avec débits garantis (Mbps) $a_i$ : | 20,10,5,1,3,8 |
| - Gain par stratégie attribuée $c_i$ : | 80,20,3.1.5,10 |
| - Capacité max de la cellule $B_j$ : | 185 Mbps |
| - Nombre d'utilisateurs demandant ces différentes stratégies $d_i$: | 2,3,10,30,8,3 |

$$\max P = \Sigma\, c_i\, x_i,\;\; 0 <= i <= N \text{ nombre de classes de stratégies différentes de QoS}$$

$$\Sigma\, a_i\, x_i\, <= B_j,\; \text{cellule visitée } j$$

$$0 <= x_i <= d_i,\; x_i \text{ entier}$$

On trouve $x_i$ = 2,3,7,30,8, 3 par l'algorithme classique décrit dans R. Bellmann, « Dynamic Programming », Princeton University Press, 1957. La mise en oeuvre utilisée dans l'invention est décrite dans A.Henry-Labordère, « Cours de Recherche Opérationnelle », Tome I, Presses des Ponts et Chaussées, 1995.

La Figure 3 illustre l'itération pour aller de l'état 0 à l'état 1 (essais des valeurs possibles de la variable $x_1$, et de l'état 1 à l'état 2 (essais des valeurs possibles de la variable $x_2$). Le vecteur $J_i(\xi)$ donne les valeurs intermédiaires optimales pour atteindre l'état $(\xi)$.

La capacité utilisée à l'optimum est seulement de 183 (pas tout) sur une demande de stratégie de classe # 1. On n'a pu allouer que 7 stratégies de classe # 3 sur les 10 demandées. Toute la capacité n'a cependant pas été utilisée car l'équipement EP *garantit les débits demandés* (pas de valeurs non entières).

Le temps de l'algorithme est polynomial. Il peut traiter plusieurs centaines de stratégies différentes, mais en pratique on n'en définit pas plus de quelques dizaines.

Si 3) était possible (MME spécial), on pourrait tenter de transférer certains utilisateurs sur d'autres cellules voisines en forçant des transferts pour ne pas les pénaliser quand des "chefs prioritaires" veulent du débit sur une cellule. Pour cela, l'invention prévoit une nouvelle commande GTP dans le sens passerelle PGW -> unité MME (« GTP Forced Handover ») comprenant le TEID c'est à dire l'identifiant du tunnel précédent et l'identifiant de la nouvelle cellule dépendant de la même unité MME (ou unité SGSN en 3G).

La description de l'invention comporte un équipement EP qui est soit le GGSN, en 3G, soit la PGW en 4G, ce qui a l'avantage de fonctioner avec un PCRF standard du commerce dont le protocole, appelé Gx, de communication avec le GGSN ou le PGW ne comporte pas la remontée par celui-ci de l'information de cellule vers le PCRF . A condition que le PCRF soit adapté, une variante de réalisation de l'invention au niveau du PCRF serait de mettre le module dynamique d'allocation(MADF) et la BD-URR dans le PCRF plutôt que dans le GGSN ou la PGW.

L'invention permet de répartir facilement le traffic de très grands réseaux. Il suffit de mettre plusieurs « passerelles d'accès aux services internet » identiques. Chacune traite plusieurs SGSN (3G) ou MME (4G), et bien entendu tout le trafic d'une cellule données est traité par une passerelle donnée, ce qui est nécessaire pour le fonctionnement de l'invention.

Prise en compte du débit maximum de l'interface SGi (ou Gi en 3G) des routeurs PCEF

L'invention permet de prendre en compte non seulement la limite de débit sur une cellule, mais aussi sur le routeur PCEF # k choisi. On a 2 contraintes de capacité

$$\Sigma \ a_i \ x_i <= B_j, \text{ pour la cellule visitée } j$$

$$\Sigma \ a_i \ x_i + \text{autre trafic sur le routeur PCEF\#k} <= C_k, \text{(la base de don-nées BD-URR donne aussi l'affectation à un routeur PCEF)}$$

$$\text{Le routeur PCEF calcule LIM} = \min \ (B_j, C_k - \text{autre trafic sur PCEF\#k)}$$

Dans la plupart des cas MIN = Bj car la limite vient de la bande passante radio et traite un problème "sac à dos" *avec une contrainte unique*

$$\max P = \Sigma \ c_i \ x_i$$

$$\Sigma \ a_i \ x_i <= MIN$$

$$0 <= x_i <= d_i, \ x_i \text{ entier}$$

L'algorithme de résolution de type Bellman-Jacobi utilise N « vecteurs d'état s» de dimension M= MIN / min ai, c'est à dire M= 185/1 = 185 dans l'exemple, comme illustré par la Figure 3. On voit que l'état intermédiaire $\xi$ = 40 de l'étape 2 est atteint par une trajectoire optimale $x_1$ = 2, $x_2$ = 0 pour un optimum $J_2(\xi)$ = 160. L'état $\xi$ = 40 peut être atteint à partir de 2 trajectoires $x_1$ = 2, $x_2$ = 0 ou $x_1$ = 1, $x_2$ = 2 et l'optimum est atteint avec la première trajectoire.
Il est donc très rapide et son temps de résolution linéaire par rapport à ces valeurs, c'est le grand intérêt de Bellman-Jacobi.
L'invention sera en outre explicitée à l'aide de l'annexe.

**GLOSSAIRE**

| | |
|---|---|
| DPI | Deep Packet Inspection |
| eNodeB | Stations de base des réseaux 4G communiquant entre elles par une interface appelée X2. |
| GGSN | Gateway (GPRS) Service Node (3G) passerelle d'interconnexion entre le réseau paquet mobile et le réseau IP externe |
| PGW ou PDN GW | Packet Data Network Gateway (4G). On nomme "ensemble PGW" le PGW avec ou plusieurs PCEF formant un tout logique. |
| SGSN | Servicing GPRS Service Node (3G) |
| MME (4G) | Mobility Management Entity |
| PCC | Policy and Charging Control |

| | |
|---|---|
| PCRF | Policy and Charging Rules Function |
| PCEF | Policy and Charging Enforcement Function |
| GTP GPRS | Tunneling Protocol, V1 en 3G et V2 en 4G |
| GTP-C | La partie du protocole GTP qui gère l'établissent des contextes ou des sessions des utilisateurs |
| GTP-U | La partie du protocole GTP qui permet de "tunneliser" les données entre un mobile et le GGSN ou PGW |
| SGW | Serving Gateway. Dans l'invention il est intégré à "l'ensemble PGW" |
| IMSI | "International Mobile Subscriber Identity": numéro d'abonné dans la carte SIM, complètement indépendant du MSISDN de l'abonné. |
| GTP v1 ou v2 GPRS | Transmission Protocol. Il comporte « Create PDP Context » et « Create Session Request » pour débuter la session et demander l'attribution des ressources correspondant à la QoS du demandeur. |
| Gx | Protocole basé sur DIAMETER pour l'interface avec le PCRF |
| MSISDN | Numéro de Mobile habituel |
| SON | Self Organizing Networks (Réseau radio 4G s'auto-réorganisant pour déplacer les abonnés vers des cellules voisines, modifier leur qualité de service ou modifier la géométrie des cellules). |
| SS7 | "Signalling System N°7", réseau de signalisation mondial pour la transmission de messages surtout entre opérateurs de mobiles. |
| Sgi | Nom de l'inteface entre l'ensemble PGW et les services |
| S5/S8 | Nom de l'interface entre les MMEs locaux ou distants et l'emsemble PGW. |
| QoS | Quality of Service, Qualité de Service. |
| SDP | Service Data Point, élement d'un PCRF formant une base de données des priorités de service et débits des différents utilsateurs. |
| Contexte PDP | Description du type de service d'un utilisateur comprenant l'APN (par exemple Internet, VoIP et sa QoS). |

ANNEXE:

Cas où l'interrogation du PCRF est faite par le PCEF /* signification par le GGSN ou PGW d'une nouvelle session au PCEF */ _____ Header IP received _____

```
            Src IP '192.168.2.2' Src Port 2123
            Dst IP '192.168.0.4' Dst Port 2123
            - - - - Super Detailed GTP, Gi, SIP, DIAMETER, RADIUS Analyser
(C)HALYS - RS=1 ENCAPS=1 msglen=213 - -
                (48)GTP version 2(1=GSM,2= LTE), T(presence TEID)=1
                Message Type:(244):Create PCEF Session Request (PGW-
>PCEF Vendor Specific)
                Length_Payload 209
                TEID=  B4B3B2B1(Hexa) 3031675569(Dec)
                SequenceNumber 12345
                Spare 00
                    (1):IMSI(International Mobile Subscriber Identity)
                      L(TLV type) = 8
                      CR flag: 00 Instance: 00
                      Data: 208103695303502
                    (76):MSISDN
                      L(TLV type) = 7
                      CR flag: 00 Instance: 00
                      Data: 33608123456
                    (82):Radio Access Technology(RAT)
                      L(TLV type) = 1
                      CR flag: 00 Instance: 00
                      Data: (1):UTRAN
                    (86):User Location Information(ULI)
                      L(TLV type) = 8
                      CR flag: 00 Instance: 00
                      SAI  present(7 otets)
                        MCC=208 MNC=10 LAC=46508 Cell_ID=61677
                    (71):APN(Access Point Name)
                      L(TLV type) = 12
                      CR flag: 00 Instance: 00
```

```
                  Data: xxx.yyy.zzz
              (99):PDN Type
                L(TLV type) = 1
                CR flag: 00 Instance: 00
                PDN type: (1):IPv4
              (79):PDN Address Allocation(IP allocated to UE)
                L(TLV type) = 5
                CR flag: 00 Instance: 00
                Data: 123.124.125.126
                 PDN Type (1):IPv4
              (127):APN Restriction
                L(TLV type) = 1
                CR flag: 00 Instance: 00
                Data:  12
              (72):Aggregate Maximum Bit Rate(AMBR)
                L(TLV type) = 8
                CR flag: 00 Instance: 00
                Uplink:       70000 bits/sec
                Downlink:   200000 bits/sec
              (78):Protocol Configuration Options(PCO)
                L(TLV type) = 23
                CR flag: 00 Instance: 00
                Data:
808021100100001081060000000008306000000000000A00
              (93):Bearer Context /* QoS allouée par le SGSN ou le
MME et venant du HLR ou HSS dans le INSERT SUBSCRIBER DATA (GPRS) */
                L(TLV type) = 31
                CR flag: 00 Instance: 00
                 (73):EPS Bearer ID (EBI)
                   L = 1
                   CR flag: 00 Instance: 00
                   Data: 5
                 (80):Bearer level Quality of Service
                   L = 22
                   CR flag: 00 Instance: 00
```

```
                    Pre-emption Vulnerability: (0):Enabled
                    Priority Level: 7
                    Pre-emption Capability: (1):Disabled
                    Label (QCI): (6):Non-GBR,priority = 7, 100 ms:
Interactive gaming
                    Maximum Bit Rate for Uplink: 1024 kbps
                    Maximum Bit Rate for Downlink: 1024 knps
                    Guaranteed Bit Rate for Uplink: 0 kbps
                    Guaranteed Bit Rate for Downlink: 0 kbps
              (87):Fully qualified End Point Identifier(F-TEID)
               L(TLV type) = 9
               CR flag: 00 Instance: 02
               IP type: (2):IPv4
               Interface type: (5):S5/S8 PGW GTP-U interface (set
by PGW in Create Session Response PGW->SGW)
               TEID/GRE Key: 00000002(Hexa) 2(Dec)
               IPv4: 192.168.0.4
              (87):Fully qualified End Point Identifier(F-TEID)
               L(TLV type) = 9
               CR flag: 00 Instance: 00
               IP type: (2):IPv4
               Interface type: (1):S1-U SGW GTP-U interface
(added by SGW in Create Session Response SGW->MME)
               TEID/GRE Key: 00000002(Hexa) 2(Dec)
               IPv4: 192.168.0.4
              (87):Fully qualified End Point Identifier(F-TEID)
               L(TLV type) = 9
               CR flag: 00 Instance: 00
               IP type: (2):IPv4
               Interface type: (0):S1-U eNodeB GTP-U interface
(set by MME in Create Session Request MME->SGW)
               TEID/GRE Key: A1A2A3A4(Hexa) 2711790500(Dec)
               IPv4: 2.3.4.5
              (87):Fully qualified End Point Identifier(F-TEID)
               L(TLV type) = 9
```

```
                    CR flag: 00 Instance: 02
                    IP type: (2):IPv4
                    Interface type: (4):S5/S8 SGW GTP-U interface
(added by SGW in Create Session Request SGW->PGW
                    TEID/GRE Key: A1A2A3A4(Hexa) 2711790500(Dec)
                    IPv4: 2.3.4.5
```

/* réponse du  PCEF (cas où c'est lui qui a interrogé le PCRF pour obtenir la QoS )*/

```
        - - - - Super Detailed GTP, Gi, SIP, DIAMETER, RADIUS Analyser
(C)HALYS - RS=0 ENCAPS=1 msglen=53 - -
                (48)GTP version 2(1=GSM,2= LTE), T(presence TEID)=1
                Message Type:(245):Create PCEF Session Response(PGW<-
PCEF Vendor Specific)
                Length_Payload 49
                TEID= B4B3B2B1(Hexa) 3031675569(Dec)
                SequenceNumber 12345
                Spare 00
                  (2):Cause
                    L(TLV type) = 2
                    CR flag: 00 Instance: 00
                    Data: (16):Request Accepted
                  (93):Bearer Context /* QoS "brute", elle est
allouée par le PCRF sans considération de l'occupation de la cellule
MCC=208 MNC=10 LAC=46508 Cell_ID=61677 */
                    L(TLV type) = 31
                    CR flag: 00 Instance: 00
                      (73):EPS Bearer ID (EBI)
                        L = 1
                        CR flag: 00 Instance: 00
                        Data: 5
                      (80):Bearer level Quality of Service
                        L = 22
                        CR flag: 00 Instance: 00
                        Pre-emption Vulnerability: (0):Enabled
```

```
Priority Level: 7
Pre-emption Capability: (1):Disabled
Label (QCI): (6):Non-GBR,priority = 7, 100 ms:
```

Interactive gaming

```
Maximum Bit Rate for Uplink: 1024 kbps
Maximum Bit Rate for Downlink: 1024 knps
Guaranteed Bit Rate for Uplink: 512 kbps
Guaranteed Bit Rate for Downlink: 512 kbps
```

**Revendications**

1. Equipement de passerelle d'accès de mobiles à Internet comprenant :

   - une ou plusieurs passerelles d'accès à Internet (PGW/GGSN) et un routeur (PCEF),

   équipement **caractérisé en ce qu'**il comprend :

   - un module dynamique d'allocation (MADF), et
   - une base de données (BD-URR) contenant l'occupation en débit des cellules et des routeurs,
   - le module dynamique (MADF) étant adapté pour traiter la requête de session d'un mobile entrant (MS) et pour calculer le coefficient de qualité de service, QoS, indiquant la priorité qui sera attribuée au mobile entrant (MS) en tenant compte de l'occupation en débit de la cellule de ce mobile entrant (MS) par les autres mobiles utilisateurs (MS1, MS2, MS3) déjà engagés dans des sessions dans la même cellule et de leurs coefficients de qualité de service, QoS, indiquant les priorités de ces autres mobiles utilisateurs pour optimiser le flux total (somme des débits alloués aux mobiles utilisateurs MS1, MS2, MS3) possible en fonction des débits alloués et réorganiser la répartition des débits alloués en fonction des coefficients de qualité de service, QoS, des différents mobiles utilisateurs (MS1, MS2, MS3), en tenant également compte du débit maximum disponible sur l'interface du routeur (PCEF) avec Internet,
   - le module dynamique (MADF) étant aussi adapté pour recalculer les coefficients de qualité de service, QoS, des différents mobiles utilisateurs (MS1, MS2, MS3) déjà engagés dans des sessions dans la même cellule.

2. Equipement de passerelle d'accès à Internet selon la revendication 1, **caractérisé en ce que** le module dynamique d'allocation (MADF) est adapté pour tenir compte des priorités à l'arrivée d'un mobile entrant (MS) et générer à destination des mobiles de la cellule du mobile entrant les requêtes suivantes :

   - une requête de modification du coefficient QoS,
   - une demande de suppression de session,
   - une demande de transfert d'un mobile vers une autre cellule,
   - une demande de dégradation du coefficient QoS d'un mobile non prioritaire en activant un « Contexte PDP secondaire »,
   - en fonction de l'optimisation de l'utilisation des ressources de communication du réseau (GPRS) et des priorités des différents abonnés déjà en session.

3. Equipement de passerelle d'accès à Internet selon la revendication 1, **caractérisé en ce qu'**il comprend plusieurs routeurs (PCEF) gérés par le module dynamique (MADP) et la fonction (PGW) pour adapter le flux utilisateur (IP) aux besoins d'une cellule.

4. Equipement selon la revendication 1,
   **caractérisé en ce que**
   dans le cas d'un grand réseau, plusieurs passerelles gèrent chacune un groupe de (SGSN) ou (MME) de façon à ce qu'une passerelle donnée puisse centraliser le traitement d'une cellule donnée.

**EP 2 879 431 B1**

**Patentansprüche**

1. Gatewayvorrichtung zum mobilen Zugang im Internet, umfassend:

   - ein oder mehrere Gateways zum Zugang im Internet (PGW/GGSN) und einen Router (PCEF),

   wobei die Vorrichtung **dadurch gekennzeichnet ist, dass** sie umfasst:

   - ein dynamisches Zuordnungsmodul (MADF), und
   - eine Datenbank (BD-URR), welche die Rate-Belegung der Zellen und der Router enthält,
   - wobei das dynamische Modul (MADF) dazu ausgebildet ist, eine Sitzungsanfrage eines eintretenden Handys (MS) zu verarbeiten und den Servicequalitätskoeffizienten, QoS, zu berechnen, der die Priorität anzeigt, welche dem eintretenden Handy (MS) zugeordnet werden wird, indem die Rate-Belegung der Zelle dieses eintretenden Handys (MS) durch die anderen Benutzerhandys (MS1, MS2, MS3), die schon an Sitzungen innerhalb derselben Zelle teilnehmen, sowie deren Servicequalitätskoeffizienten, QoS, welche die Prioritäten dieser anderen Benutzerhandys anzeigen, um den möglichen, gesamten Fluss (Summe der den Benutzerhandys MA1, MS2, MS3 zugeordneten Raten) abhängig von den zugeordneten Raten zu optimieren, berücksichtigt werden, und die Verteilung der zugeordneten Raten abhängig von den Servicequalitätskoeffizienten, QoS, der verschiedenen Benutzerhandys (MS1, MS2, MS3) umzuorganisieren, indem die Rate, die auf der Schnittstelle des Routers (PCEF) mit dem Internet maximal zur Verfügung steht, ebenfalls berücksichtigt wird,
   - wobei das dynamische Modul (MADF) auch dazu ausgebildet ist, die Servicequalitätskoeffizienten, QoS, der verschiedenen Benutzerhandys (MS1, MS2, MS3), die schon an Sitzungen innerhalb derselben Zelle teilnehmen, neu zu berechnen.

2. Gatewayvorrichtung zum mobilen Zugang im Internet gemäß Anspruch 1, **dadurch gekennzeichnet, dass** das dynamische Zuordnungsmodul (MADF) dazu ausgebildet ist, Prioritäten bei der Ankunft eines eintretenden Handys (MS) zu berücksichtigen und für die Handys der Zelle des eintretenden Handys folgende Anfragen zu generieren:

   - eine Anfrage zur Abänderung des QoS Koeffizientens,
   - eine Anforderung zur Löschung der Sitzung,
   - eine Anforderung zur Übertragung eines Handys auf eine andere Zelle,
   - eine Anforderung zur Abstufung des QoS Koeffizientens eines nicht prioritären Handys, indem ein "sekundärer PDP-Kontext" aktiviert wird,
   - abhängig von der Optimierung der Verwendung der Kommunikationsressourcen des Netzes (GPRS) und der Prioritäten der verschiedenen Teilnehmer, die schon in einer Sitzung sind.

3. Gatewayvorrichtung zum mobilen Zugang im Internet gemäß Anspruch 1, **dadurch gekennzeichnet, dass** sie mehrere Router (PCEF), die durch das dynamische Modul (MADP) und die Funktion (PGW) geleitet werden, um den Benutzerfluss (IP) an die Bedürfnisse einer Zelle anzupassen, umfasst.

4. Vorrichtung gemäß Anspruch 1,
   **dadurch gekennzeichnet, dass**
   im Fall eines großen Netzes mehrere Gateways jeweils eine Gruppe von (SGSN) oder (MME) leiten, so dass eine gegebene Gateway die Verarbeitung einer gegebenen Zelle zentralisieren kann.

**Claims**

1. Equipment item for gateway access of mobile users to the Internet, comprising:

   - one or more Internet access gateways (PGW/GGSN) and a router (PCEF),
   - a dynamic allocation module (MADF), and
   - a database (BD-URR) containing the throughput occupancy of the cells and the routers,
   - the dynamic module (MADF) being adapted to process the session request of an incoming mobile user (MS) and to calculate the service quality coefficient, QoS, indicating the priority which will be attributed to the incoming mobile user (MS) taking into account the throughput occupancy of the cell of this incoming mobile user (MS) by the other mobile users (MS1, MS2, MS3) which are already involved in sessions in the same cell and the

16

service quality coefficients thereof, QoS, indicating the priorities of these other mobile users in order to optimise the total possible flow (sum of the throughputs allocated to the mobile users (MS1, MS2, MS3) in accordance with the throughputs allocated and to reorganise the distribution of the throughputs allocated in accordance with the service quality coefficients, QoS, of the different mobile users (MS1, MS2, MS3) also taking into account the maximum available throughput on the interface of the router (PCEF) with the Internet,

- the dynamic module (MADF) also being adapted to recalculate the service quality coefficients, QoS, of the different mobile users (MS1, MS2, MS3) who are already involved in sessions in the same cell.

2.   Equipment item for Internet gateway access according to claim 1,
     **characterised in that**
     the dynamic allocation module (MADF) is adapted to take into account the priorities during the arrival of an incoming mobile user (MS) and to generate for mobile users of the cell of the incoming mobile user the following requests:

       - a request for modification of the coefficient QoS,
       - a request for session termination,
       - a request for transfer of a mobile user to another cell,
       - a request for degradation of the QoS coefficient of a non-priority mobile user by activating a "secondary PDP context",
       - in accordance with the optimisation of the use of the communication resources of the network (GPRS) and the priorities of the different subscribers already involved in the session.

3.   Equipment item for Internet gateway access according to claim 1,
     **characterised in that** it comprises
     several routers (PCEF) controlled by the dynamic module (MADP) and the function (PGW) in order to adapt the user flow (IP) to the requirements of a cell.

4.   Equipment item according to claim 1,
     **characterised in that**,
     in the case of a large network, several gateways each control a group of (SGSN) or (MME) so that a specific gateway can centralise the processing of a given cell.

*Fig. 1*

EP 2 879 431 B1

Fig. 2

Fig. 3

Fig. 4

$160 = max(2 \times c_1 + 0 \times c_2, \ 1 \times c_1 + 2 \times c_2)$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011160660 A

**Littérature non-brevet citée dans la description**

- *3GPP TS 23.203 v12.2.0*
- **R. BELLMANN.** Dynamic Programming. Princeton University Press, 1957
- **A.HENRY-LABORDÈRE.** Cours de Recherche Opérationnelle. Presses des Ponts et Chaussées, 1995